(19) Europäisches Patentamt
European Patent Office
Office européen des brevets

(11) **EP 4 138 000 A1**

(12) **EUROPEAN PATENT APPLICATION**

(43) Date of publication:
**22.02.2023 Bulletin 2023/08**

(21) Application number: **21191966.7**

(22) Date of filing: **18.08.2021**

(51) International Patent Classification (IPC):
**G06N 3/08** (2006.01)  **G06N 10/40** (2022.01)
**G06N 3/04** (2006.01)

(52) Cooperative Patent Classification (CPC):
**G06N 10/40; G06N 3/08;** G06N 3/045; G06N 10/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Freie Universität Berlin
14195 Berlin (DE)**

(72) Inventors:
• **NOÉ, Frank
14195 BERLIN (DE)**
• **ERDMAN, Paolo A.
14195 BERLIN (DE)**

(74) Representative: **Müller, Wolfram Hubertus
Patentanwalt
Teltower Damm 15
14169 Berlin (DE)**

(54) **QUANTUM THERMAL SYSTEM**

(57) The invention regards a quantum thermal system comprising a quantum thermal machine (10) and a computer agent (30). The quantum thermal machine (10) comprises at least two thermal baths (1, 3), each thermal bath (1, 3) characterized by a temperature, and a quantum system (2) coupled to the thermal baths (1, 3). The quantum thermal machine (10) is configured to perform thermodynamic cycles between the quantum system (2) and the thermal baths (1, 3), the thermodynamic cycles including heat fluxes ($J_H(t)$, $J_C(t)$) flowing from the thermal baths (1, 3) to the quantum system (2), wherein the heat fluxes ($J_H(t)$, $J_C(t)$) vary in time and are dependent on at least one time-dependent control parameter ($\vec{u}(t)$, $d(t)$). The computer agent (30) implements a reinforcement learning algorithm and is configured to vary the at least one time-dependent control parameter ($\vec{u}(t)$, $d(t)$) to change the heat fluxes ($J_H(t)$, $J_C(t)$) such that a predefined long-term reward dependent on the heat fluxes ($J_H(t)$, $J_C(t)$) is maximised. Further aspect of the invention regard a method for maximizing a long-term reward dependent on heat fluxes ($J_H(t)$, $J_C(t)$) in thermodynamic cycles of a quantum thermal machine (10) and a computer agent (30) which is applicable without any prior knowledge of the quantum thermal machine.

Fig. 6

**Description**

The present disclosure relates to quantum thermal system, a method for maximizing a long-term reward dependent on heat fluxes in thermodynamic cycles of a quantum thermal machine, and a computer agent. The quantum thermal system proposed here is a self-learning system comprised of a quantum thermal machine and a computer agent, wherein at least one time-dependent control parameter of the quantum thermal machine controlling the heat fluxes in thermodynamic cycles is varied to maximize a predefined long-term reward dependent on the heat fluxes.

Thermal machines convert between thermal and mechanical energy in a controlled manner. Examples include heat engines such as steam and Otto engines, that extract useful work from a temperature difference, and refrigerators, that extract heat from a cold bath. A thermal machine is composed of three main elements: a hot bath, a cold bath, and a "working substance", which could be a gas or a fluid in a classical thermal machine. A Quantum Thermal Machine (QTM) performs thermodynamic cycles between a hot and a cold bath using microscale or nanoscale quantum systems as "working substance".

B. Karimi and J. P. Pekola, "Otto refrigerator based on a superconducting qubit: Classical and quantum performance," Phys. Rev. B., vol. 94, p. 184503, 2016, discuss a quantum Otto refrigerator based on a superconducting qubit coupled to two LC resonators, each including a resistor acting as a reservoir. A plurality of various driving wave forms are investigated, wherein it is found that, compared to a standard sinusoidal drive, a truncated trapezoidal drive with optimized rise and dwell times yields higher cooling power and efficiency.

There is a general desire to optimize a quantum thermal machine as to its cooling/heating power and efficiency, in particular a quantum thermal machine that is out of equilibrium, meaning that it is not in a fully thermalized state with a hot or cold bath.

An object underlying the present invention is to provide a quantum thermal system and method optimizing over the long-run any user-defined function of the heat fluxes. This includes but is not limited to the long-term average extracted power of a heat engine, or the long-term average cooling power of a refrigerator.

The invention provides for a quantum thermal system with the features of claim 1, a method with the features of claim 13 and a computer agent with the features of claim 15. Embodiments of the invention are identified in the dependent claims.

According to an aspect of the invention, a quantum thermal system is provided that comprises a quantum thermal machine and a computer agent. The quantum thermal machine comprises at least two thermal baths, each thermal bath characterized by a temperature, and a quantum system coupled to the thermal baths. The quantum thermal machine is configured to perform thermodynamic cycles between the quantum system and the thermal baths, wherein the thermodynamic cycles include heat fluxes flowing from the thermal baths to the quantum system, and wherein the heat fluxes vary in time and are dependent on at least one time-dependent control parameter. Accordingly, instantaneous heat fluxes flowing from the baths to the quantum system are present. The instantaneous heat fluxes vary in time, and their value depends on the modulation of the at least one time-dependent control parameter.

The computer agent implements a reinforcement learning algorithm and is configured to vary the at least one time-dependent control parameter in order to change the heat fluxes such that a predefined long-term reward dependent on the heat fluxes is maximised.

Aspects of the invention are thus based on the idea to maximize a predefined long-term reward which is dependent on the heat fluxes. To this end, a computer agent varies at least one time-dependent control parameter. The long-term reward depends on the desired output from the machine and can in general be computed from the heat fluxes over time. In one embodiment, the long-term reward to be maximized is the long term time-average of the power extracted from the system in a heat engine case. In another embodiment, the long-term reward is long-term time average of the cooling power in a refrigerator case. In a third embodiment, the efficiency can be maximized by including a running sum of the absorbed heat into the long-term reward, which is possible in either the heat engine or the refrigerator case.

The computer agent implements a reinforcement learning algorithm to vary in time the at least one time-dependent control parameter to maximize the predefined long-term reward. More particularly, in an embodiment, the computer agent and the quantum thermal machine are configured to perform a method comprising the steps of:

- discretizing time in time-steps $t_i$ with defined spacing $\Delta t$,
- at a time step $t_i$, passing a value of the at least one time-dependent control parameter from the computer agent to the quantum thermal machine, the value being an output value of a reinforcement learning algorithm (wherein the output value is based on the experience accumulated in the previous time steps),
- set at least one time-dependent control parameter at the quantum thermal machine to the received value throughout the subsequent time-interval $[t_i, t_{i+1}]$,
- at the subsequent time step $t_{i+1}$, output by the quantum thermal machine a short-term reward $r_{i+1}$ to the computer agent, the short-term reward $r_{i+1}$ being representative of a short-term average of a function of the heat fluxes during the time-interval $[t_i, t_{i+1}]$ caused by the received value, and
- processing the short-term reward $r_{i+1}$ as an input value to the reinforcement learning algorithm,
- repeating the above steps for a plurality of time-steps

$t_i$, wherein the reinforcement learning algorithm is configured to maximize the long-term reward, consisting of a long-term weighed average of the short term rewards, on the basis of the received short-term rewards $r_{i+1}$.

The computer agent thus adapts its behavior in generating values for the at least one control parameter such that the chosen long-term reward is maximized.

Further aspects of the invention are thus based on the idea to use reinforcement learning to optimize the chosen long-term reward (such as the long-term average extracted power of a quantum heat engine or the long-term average cooling power of a quantum refrigerator) with respect to the choice of at least one time-dependent control parameter, wherein reinforcement learning is applied in a specific manner in that a value $r_{i+1}$ representative of a short time average of a function such as a linear combination of heat fluxes during considered time-intervals is input to the reinforcement learning agent, and wherein the reinforcement learning agent outputs as action a changed value of the at least one time-dependent control parameter that is implemented at the quantum thermal machine for the next time-step.

The invention thus provides an efficient method to optimize a long term reward dependent on a function of heat fluxes in a quantum thermal machine, wherein the long-term reward consists of a long-term weighed average of the short term rewards input into the reinforcement learning algorithm. This allows, e.g., to optimize the long-term average power of a heat engine or the long-term average cooling power of a refrigerator.

A further advantage associated with the present invention lies in that optimal finite-time cycles can be found without any prior knowledge of the system, as a model-free reinforcement learning is implemented that varies the at least one control parameter via self-learning while only relying on monitoring the heat fluxes into and out of the quantum system, meaning that the same exact algorithm can be applied to any quantum thermal machine without any knowledge of the system.

It is pointed out that the step that the quantum thermal machine outputs to the computer agent a short-term reward $r_{i+1}$ representative of a short term average of the function of the heat fluxes during a considered time-interval $[t_i, t_{i+1}]$ implies that these heat fluxes, or the function of the heat fluxes, are measured. Measurement of such heat fluxes may take place by measuring the change in temperature of the hot bath of the cold bath. Implementations of such measurements have been described by A. Ronzani ez al.: "Tunable photonic heat transport in a quantum heat valve," Nat. Phys., vol. 14, p. 991, 2018, and by J. Senior et al.: "Heat rectification via a superconducting artificial atom," Commun. Phys., vol. 3, p. 40, 2020.

The quantum thermal machine can be both a heat engine whose objective is to extract work (e.g. electrical or mechanical work) or a refrigerator whose objective is to cool an object or substance. Accordingly, in one embodiment, the quantum thermal machine is configured to act as a refrigerator, wherein in each thermodynamic cycle work is being done on the quantum system such that it can extract heat from the cold thermal bath and transmit heat to the hot thermal bath, wherein the long-term reward to be maximized is the long-term time-average of the cooling power of the refrigerator. In another embodiment, the thermal machine is configured to act as a heat engine, wherein in each thermodynamic cycle work can be harvested from the quantum system while it receives heat from the hot thermal bath and transmits heat to the cold thermal bath, wherein the long-term reward to be maximized is the long-term time-average of the power extracted from the heat engine.

While the proposed system can employ any quantum system with at least one control parameter, an embodiment employs a quantum system comprising at least one qubit, in particular a superconducting transmon qubit, having a ground state and an excited state which define an energy spacing $\Delta E$ between. This energy spacing $\Delta E$ of the qubit can be controlled through a magnetic flux. This magnetic flux represents in this embodiment the or one of the time-dependent control parameters that control the heat flux during the thermodynamic cycles. Accordingly, in such embodiment, the magnetic flux, which controls the energy spacing $\Delta E$, is to be controlled in time and optimized using reinforcement learning to optimize the thermodynamic cycles according to the chosen long-term reward.

In other embodiments, energy spacing $\Delta E$ of the qubit may be controlled by other control parameters.

It is pointed out that a plurality of qubits may be arranged in parallel in the quantum system, wherein the number may be sufficiently high to reduce probabilistic effects inherent in any quantum nanoscale system and to increase the power. It is also pointed out that the energy spacing $\Delta E$ of the qubit may be controlled by other control parameters.

In an embodiment, the quantum thermal system is configured such that at each time step $t_i$ the reinforcement learning agent can choose a value of the magnetic flux applied to the qubit. In such embodiment, the coupling between the qubit and the baths is such that the modulation of the magnetic flux also impacts the coupling strength between the qubit and the baths, allowing to choose whether the qubit is mainly coupled to the hot or cold bath.

In an embodiment, the short-term reward $r_i$ is the average cooling power, i.e. the average heat flux flowing out of the cold bath, during the time interval $[t_{i-1}, t_i]$: this choice optimizes the performance of the quantum thermal machine operated as a refrigerator. Alternatively, the short-term reward $r_i$ is the average total heat flux flowing out of the baths during the time interval $[t_{i-1}, t_i]$, which optimizes the performance of the quantum thermal machine operated as a heat engine. However, in other embodiments, other functions or linear combinations of the heat fluxes may be considered.

In an embodiment, the hot thermal bath and the cold thermal bath are each implemented by a RLC circuit coupled to the quantum system via a capacitor. In such case, the quantum system is a transmon qubit having an energy spacing that depends on the magnetic flux piercing a loop of the transmon qubit.

It is pointed out that the quantum thermal machine may be a physical, real-world implementation or, alternatively, a computer simulation run on a computer. The computer agent is a computer implementation in both cases.

The reinforcement learning algorithm may be configured such that it receives for each time-step as input a state $s_i$ and the short-term reward $r_i$ and to output an action $a_i$ to the quantum thermal machine, wherein

- the state $s_i$ is a sequence of past actions ($a_{i-N}$, $a_{i-(N-1)}$, ..., $a_{i-1}$) in a specified time interval [$t_i - T$, $t_i$]),
- the short-term reward $r_i$ is representative of a short-term average of a function of the heat fluxes during the time-interval [$t_{i-1}$, $t_i$],
- the action $a_i$ is to output a value of the at least one time-dependent control parameter to the quantum thermal machine,
- the reinforcement learning algorithm comprising:
- a policy function $\pi$ realized by a neural network or other machine learning structure, wherein a state s is input to the policy function $\pi$ and an action a is output from the policy function $\pi$,
- a value function $Q$ realized by a neural network or other machine learning structure, wherein a state s and an action a are inputs into the value function $Q$ and a value is output from the value function $Q$,
- a replay buffer wherein past experience is saved at each time-step as a collection of transitions ($s_i$, $a_i$, $r_{i+1}$, $s_{i+1}$),
- wherein the value function $Q$ and the replay buffer improve the policy function $\pi$,
- wherein the policy function $\pi$ and the replay buffer improve the value function Q,
- wherein the action $a_i$, obtained by inputting the state $s_i$ into the policy function $\pi$, is output to the quantum thermal machine at each time-step.

Regarding the used terminology, the following is pointed out. A time-step $t_i$ represents a specific instant in time. A time-interval [$t_a$, $t_b$] represents all the time between instant $t_a$ and instant $t_b$. Depending on the context, the expression "time-interval" is used to represent two different things:

- when referring to a "specified" time interval [$t_i - T$, $t_i$], it is referred to all time between $t_i - T$ and $t_i$, and this interval of duration T includes many time-steps,
- when referring to the "time-interval" [$t_{i-1}$, $t_i$], it is referred to a "short" time interval between $t_{i-1}$ and $t_i$ of duration $\Delta$t.

The use of a policy function $\pi$ acting as actor and of a value function Q as critic in the reinforcement learning algorithm is in accordance with standard embodiments of reinforcement learning well known to the skilled person. More particularly, the steps that the value function Q and the replay buffer improve the policy function $\pi$ and that the policy function $\pi$ and the replay buffer improve the value function Q are also referred to as "policy iteration", and it is known to the skilled person.

More particularly, it may be further provided that

- a batch of past experience ($s_j$, $a_j$, $r_{j+1}$, $s_{j+1}$) is drawn from the replay buffer and passed to the value function Q and to the policy function $\pi$ to determine an error that is used to improve the value function Q (this error is called "Bellman Error"); and that
- a batch of past experience ($s_j$, $a_j$, $r_{j+1}$, $s_{j+1}$) is drawn from the replay buffer and passed to the value function Q and to the policy function $\pi$ to determine an improvement to the policy function $\pi$.

In this context, "improvement" means a change such that the actions chosen by the policy increase the long term reward.

In an embodiment, the reinforcement learning algorithm is programed to identify a policy that maximizes the long-term reward in the sense that the weighted average of future short-term rewards $r_i$ $r_{i+1}$, $r_{i+2}$, ... is maximized, wherein the importance of future rewards may be discounted by a factor that can be selected by the user of the system. The higher the value of such discounted long-term average is, the higher is, e.g., the long-term average cooling power in a refrigerator, or the long-term extracted power from the heat engine. Accordingly, the reinforcement learning optimizes the quantum thermal machine in providing the highest possible long-term power (e.g., average cooling power/extracted power).

In an embodiment, the quantum thermal system is configured such that the function of the heat fluxes ($J_H(t)$, $J_C(t)$) is one of:

- one of the heat fluxes, or
- a linear combination of the heat fluxes,

wherein the short-term reward $r_{i+1}$ representative of the average of the function of the heat fluxes during the time-interval [$t_i$, $t_{i+1}$] is one of:

- the average of one of the heat fluxes during the time-interval [$t_i$, $t_{i+1}$],
- the average of a linear combination of the heat fluxes during the time-interval [$t_i$, $t_{i+1}$].

For example, if a refrigerator shall be optimized, $r_{i+1}$ is simply the short term average of $Jc(t)$ during the time interval [$t_i$, $t_{i+1}$], whereas, if a heat engine shall be optimized, $r_{i+1}$ is the time average of $J_H(t) + Jc(t)$. In general, the reward may be the time average of any function of $J_H(t)$ and $J_C(t)$.

A further aspect of the present invention regards a method for maximizing a long-term reward dependent on heat fluxes in thermodynamic cycles of a quantum thermal machine, wherein the quantum thermal machine performs thermodynamic cycles between a quantum system and at least two thermal baths, and wherein the heat fluxes vary in time and are dependent on at least one time-dependent control parameter, the method comprising:

- discretizing time in time-steps $t_i$ with defined spacing $\Delta t$,
- at a time step $t_i$, passing a value of the at least one time-dependent control parameter from a computer agent to the quantum thermal machine, the value being an output value of a reinforcement learning algorithm,
- set at least one time-dependent control parameter at the quantum thermal machine to the received value throughout the subsequent time-interval $[t_i, t_{i+1}]$,
- at the subsequent time step $t_{i+1}$, output by the quantum thermal machine a short-term reward $r_{i+1}$ to the computer agent, the short-term reward $r_{i+1}$ being representative of a short-term average of a function of the heat fluxes during the time-interval $[t_i, t_{i+1}]$ caused by the received value, and
- processing the short-term reward $r_{i+1}$ as an input value to the reinforcement learning algorithm,
- repeating the above steps for a plurality of time-steps $t_i$, wherein the reinforcement learning algorithm is configured to maximize the long-term reward on the basis of the received short-term rewards $r_{i+1}$, the long-term reward being a long-term weighed average of the short term rewards.

A still further aspect of the present invention regards a computer agent, the computer agent comprising a processor and a memory device storing instructions executable by the processor, the instructions being executable by the processor to perform a method for for maximizing a long-term reward dependent on a function of the heat fluxes in thermodynamic cycles of a quantum thermal machine, the method comprising:

- providing a reinforcement learning algorithm outputting at discrete time steps $t_i$ a value of a time-dependent control parameter,
- at the discrete time steps $t_i$, passing the respective value of the time-dependent control parameter to a quantum thermal machine,
- at the respective subsequent time steps $t_{i+1}$, receiving a short-term reward $r_{i+1}$ representative of a short-term average of a function of the heat fluxes at the quantum thermal machine during a time-interval $[t_i, t_{i+1}]$ caused by the value of the time-dependent control parameter passed to the quantum thermal machine,

- processing the short-term reward $r_{i+1}$ as an input value to the reinforcement learning algorithm,
- maximizing the long-term reward on the basis of the received short-term rewards $r_{i+1}$, the long-term reward being a long-term weighed average of the short term rewards.

The embodiments described with respect to the quantum thermal system similarly apply to the method and computer agent of the present invention, for example regarding the reinforcement learning algorithm being configured to receive for each time-steps $t_i$ as input a state $s_i$ and a reward $r_i$ and to output an action $a_i$ to the quantum thermal machine, and implementing a policy function $\pi$ and a value function Q.

The invention will be explained in more detail on the basis of exemplary embodiments with reference to the accompanying drawings in which:

Fig. 1     is an abstract representation of a quantum thermal machine comprising a hot bath, a cold bath and a quantum system;

Fig. 2     is an abstract representation of a qubit based refrigerator as an example of the quantum thermal machine of Fig. 1;

Fig. 3     depicts a qubit in the excited state releasing a photon to a hot bath and a qubit in the ground state absorbing a photon from a cold bath;

Fig. 4     depicts representations of four strokes of an ideal Otto cycle implemented in the quantum thermal machine of Fig. 2;

Fig. 5     is a schematic representation of an embodiment of a quantum thermal machine comprising a transmon qubit as a quantum system and RLC circuits as cold and hot baths;

Fig. 6     is a schematic representation of a quantum thermal system comprising a quantum thermal machine and a computer agent interacting to optimize a continuous time-dependent control parameter by means of a reinforcement learning algorithm;

Fig. 7     is a graphical representation of the running average of the cooling power as a function of time-steps of a quantum thermal refrigerator optimized in accordance with Fig. 6;

Fig. 8     values of the continuous time-dependent control parameter at three specific time intervals of the graph of Fig. 7;

Fig. 9     the final continuous time-dependent control parameter for the graph of Fig. 7 as a function of time-steps;

Fig. 10   is a schematic representation of a reinforcement learning algorithm applied to power maximization of a quantum thermal machine; and

Fig. 11   is a schematic representation of policy iteration, which uses experience stored in a replay buffer to learn two quantities.

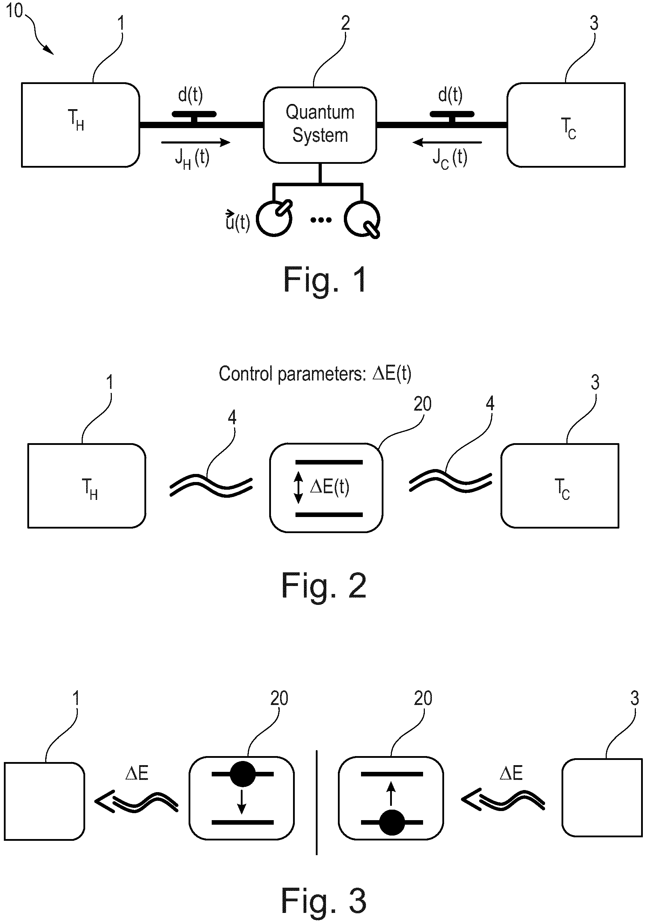

Fig. 1 is an abstract representation of a Quantum Thermal Machine (QTM) 10. A hot bath 1 and a cold bath 3 at temperatures $T_H$, $T_C$ are coupled to a quantum system 2. The Quantum Thermal Machine 10 performs thermodynamic cycles between the hot bath 1 and the cold bath 3 using microscale or nanoscale quantum systems 2 as "working substance". These systems can be as small as single particles or two-level quantum systems (qubits). It is denoted with $J_\alpha(t)$ the heat flux flowing out of bath $\alpha$ = H, C at time $t$. The state and the heat fluxes $J_\alpha(t)$ of the QTM can be controlled through a set of time-dependent continuous control parameters $\vec{u}(t)$ and eventually through an additional discrete control $d(t)$ = {Hot, Cold, None} which determines which bath 1, 3, if any, is coupled to the quantum system 2.

In classical thermal machines, the working medium could be a gas in a cylinder, and $\vec{u}(t)$ could be the time-dependent position of the piston that influences the state of the gas and allows us to exchange energy. In a QTM, the working medium is a quantum system whose Hamiltonian depends on a set of control parameters $\vec{u}(t)$. The heat fluxes $J_\alpha(t)$ thus depend on how we control the system in time, i.e. on the choice of the time-dependent functions $\vec{u}(t)$ and $d(t)$.

The Quantum Thermal Machine 10 may be operated as a refrigerator or a heat engine. For illustration purposes, most of the following description refers to the refrigerator case. However, corresponding explanations apply for the heat engine case. A refrigerator is a machine that extracts heat from the cold bath, and a single continuous control parameter $u(t)$ is considered in the following, (and no discrete control $d(t)$). If there are several control parameters, the control parameters form a vector $\vec{u}(t)$.

The aim of the present method in the present example is to determine the function $u(t)$ that maximizes the long-term average of the cooling power $\langle P_C \rangle$ defined as

$$\langle P_C \rangle = \bar{\gamma} \int_0^{+\infty} e^{-\bar{\gamma}t} J_C(t)\, dt$$

where $\bar{\gamma}$ determines the timescale over which it is averaged. Typically, $\bar{\gamma}$ is chosen such that the cooling power is averaged over a "long time-scale".

It is pointed out that the function $u(t)$ is implicitly present in the above formula for the average cooling power $\langle P_C \rangle$, as $J_C(t)$ depends on the past values of the control, i.e., on $u(t)$ in the time interval [t-T,t], where T is a time-scale of the system.

It is further pointed out that the average cooling power $\langle P_C \rangle$ is the long-term weighed average of the heat flux $J_C(t)$ flowing out of the cold bath. Any other function such as linear combination of the heat fluxes could be considered, too.

In general, it is a very complicated model-specific problem to determine the function $u(t)$ that maximizes the long-term average of the cooling power $\langle P_C \rangle$, meaning that the optimal function $u(t)$ changes from setup to setup, and may be quite unintuitive.

It is next considered an embodiment in which the quantum machine 10 is based on a superconducting transmon qubit, which can be operated as a refrigerator. Such setup was first proposed as a realistic quantum refrigerator in Ref. [1], and it has been experimentally realized and studied in the steady state in Refs. [2, 3]. Both experiments demonstrate the ability to tune a control parameter $u(t)$ and to measure the steady-state heat flux $J_C(t)$. Such setup was further studied theoretically in Refs. [4, 5].

Fig. 2 is an abstract representation of an experimentally feasible refrigerator based on a quantum system 2 that is implemented by means of a qubit 20. The two horizontal black lines represent the two energy levels of the qubit 20 (ground state and excited state), whose energy difference $\Delta E(t)$ is, in this case, controllable through the single time-dependent control parameter $u(t)$. The control parameter $u(t)$ is proportional to applied the magnetic flux. The qubit 2 is coupled to the hot and cold baths 1, 3 exchanging heat as microwave photons 4.

The parameter $u(t)$, which controls the energy difference $\Delta E(t)$ between the ground and the excited state, is considered as the time-dependent control parameter. Because of the system-bath coupling, the qubit 20 can exchange energy with the heat baths 1, 3. For example, as shown in Fig. 3 left hand side, if the qubit is in the excited state, it can release a photon with energy $\Delta E(t)$ to the hot bath 1. When this happens, the state of the qubit 20 changes from the excited to the ground state, and an amount of energy $\Delta E(t)$ is added to the hot bath 1, thus heating it of an amount $\Delta E(t)$. If instead the qubit 20 is in the ground state, as shown in Fig. 3 right hand side, it can absorb a photon from the cold bath 3. This process changes the state of the qubit 20 from the ground to the excited state, and cools the cold bath of an amount $\Delta E(t)$. The idea is to develop a scheme to - in the refrigerator case- remove heat from the cold bath 3, and release into the hot bath 1.

The following first discusses the ideal functioning principle from a conceptual point of view and then describes the setup of an embodiment where the cooling power is maximized. The functioning principle is the functional principle of an ideal Otto cycle, i.e., of a cycle that, in the ideal infinitely slow regime, allows to extract heat from a cold bath and operate a refrigerator in the infinitely slow regime.

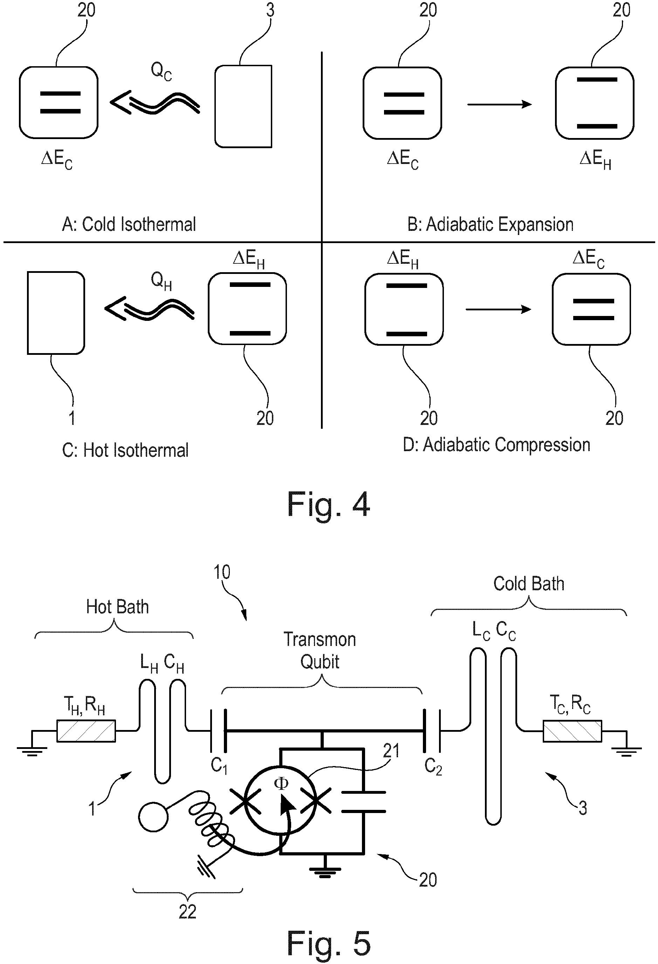

As shown in Fig. 4, the ideal Otto cycle is composed of the following four strokes:

A: Cold Isothermal. The qubit 20 is placed in contact with the cold bath 1, and it is waited a sufficiently long time for it to completely thermalize with the cold bath while keeping the control parameter $\Delta E(t)$ constant at some value $\Delta E_C$. Since it is not acted on the control parameters, no work is performed during this stroke. Therefore the amount of heat $Q_C$ extracted from the cold bath can be computed as the energy difference of the qubit yielding

$$Q_C = \Delta E_C[f(\beta_C \Delta E_C) - f(\beta_H \Delta E_H)],$$

where $\beta_\alpha = 1/(k_B T_\alpha)$ is the inverse temperature of bath $\alpha$ = H, C, $k_B$ is Boltzmann's constant, and $f(x) = (e^x + 1)^{-1}$ is the Fermi distribution.

B: Adiabatic Expansion. The qubit 20 is disconnected from both baths 1, 3, and it is acted on the control parameter as to change the energy spacing $\Delta E(t)$ from $\Delta E_C$ to $\Delta E_H$. This transformation is assumed to be done slow enough as to ensure the validity of the quantum adiabatic theorem, i.e., as to guarantee that no transition between the instantaneous eigenstates of the Hamiltonian is induced. Since the qubit is isolated, no heat is exchanged during this stroke. The work performed on the qubit to change its energy gap can thus be computed as the energy difference of the qubit, yielding

$$W_B = f(\beta_C \Delta E_C)[\Delta E_H - \Delta E_C].$$

C: Hot Isothermal. The qubit 20 is placed in contact with the hot bath, and it is waited a sufficiently long time for it to completely thermalize with the hot bath 1 while keeping the control parameter $\Delta E(t)$ constant at $\Delta E_H$. As in step A, no work is performed during this stroke. Therefore, the amount of heat $Q_H$ released into the hot bath can be computed as the energy difference of the qubit yielding

$$Q_H = \Delta E_H[f(\beta_C \Delta E_C) - f(\beta_H \Delta E_H)].$$

D: Adiabatic Compression. The qubit 20 is disconnected from both baths 1, 3, and it is acted on the control parameter as to change the energy spacing $\Delta E(t)$ from $\Delta E_H$ back to its original value $\Delta E_C$. This step is necessary to "close the cycle", and return to the initial state. As in step B, this transformation is assumed to be done slow enough as to ensure the validity of the quantum adiabatic theorem. Since the qubit is isolated, no heat is exchanged during this stroke. The work performed on the qubit to change its energy gap can thus be computed as the energy difference of the qubit, yielding

$$W_D = f(\beta_H \Delta E_H)[\Delta E_C - \Delta E_H].$$

Accordingly, an ideal Otto cycle can extract an amount of heat $Q_C$ from the cold bath 3 at each cycle. However, the object is to maximize the long-term average power $\langle P_C \rangle$ of the refrigerator. In describing the ideal Otto cycle, two crucial assumptions that only hold in the the limit of an infinitely long cycle were made, namely:

a) the isothermal processes has to be slow enough to fully thermalize the qubit;
b) the adiabatic processes has to be slow enough as to guarantee the validity of the quantum adiabatic theorem.

However, in such limit the power also vanishes, i.e. $\langle P_C \rangle \to 0$. Finite power thus requires operating the refrigerator through finite-time cycles. In such finite-time regime, the system will be driven out-of-equilibrium, and both previous assumption will at best be approximately fulfilled, or even completely violated.

Finding finite-time cycles that maximize the power is a non-trivial and non-intuitive problem because of partial thermalizations, and because of quantum non-adiabatic transitions. Finding such finite-time cycles is an object of the present invention.

Fig. 5 shows an embodiment of a quantum thermal machine 10 implementing finite-time cycles. This figure is a re-elaboration of Fig. 1b of Ref. [5].

The heat baths 1, 3 are each implemented as RLC circuits. The two circuits to the left of capacitance $C_1$ and to the right of capacitance $C_2$ act respectively as the hot bath 1 and the cold bath 3. A resistance $R_H$, $R_C$ whose temperature is $T_H$, $T_C$ acts as a source of thermalized microwave photons. The "wave-like'" elements are coplanar waveguides that represent LC resonators with inductance $L_\alpha$ and capacitance $C_\alpha$ for $\alpha$ = H, C.

The quantum system is implanted as a transmon qubit 20. The LC resonators are coupled to the transmon qubit 20 via the capacitances $C_1$ and $C_2$. The transmon qubit 20 is a well established element in circuit QED: the level-spacing $\Delta E$ of the transmon qubit depends on the magnetic flux $\phi$ created by a magnetic flux control 22 and piercing a loop 21 shown in Fig. 5. Choosing the control parameter as u(t) = ($\phi(t)$ - $\phi_0/2)/\phi_0$, where $\phi_0 = h/(2e)$ is the magnetic flux quantum, the energy gap is given by Ref. [1,5] as

$$\Delta E(u(t)) = 2E_0 \sqrt{\Delta^2 + u^2(t)},$$

where $E_0 \sim E_J$, $\Delta \sim E_C/E_J$, $E_J$ being the Josephson coupling energy of the junctions of the transmon qubit, and $E_C$ being the Cooper pair charging energy of the transmon qubit.

Therefore, it is possible to control the level spacing $\Delta E$ in time simply by changing the magnetic flux $\phi(t)$ in time. $u(t) = (\phi(t) - \phi_0/2)/\phi_0$ is the considered control parameter. Next, the qubit-bath coupling is discussed. In the ideal Otto cycle, it is required to have the possibility to decouple the qubit 20 from the baths 1, 3 (in the adiabatic strokes), and it is further required to couple the qubit 20 to a single bath 1, 3 at the time (for the isothermal strokes). While this could be theoretically described by the discrete control parameter $d(t)$, such control is not present in the embodiment of Fig. 5. Therefore, choosing which bath 1, 3 is coupled to the qubit 20 is experimentally achieved in the following way: The LC resonators of the Hot and Cold baths 1, 3 are respectively characterized by distinct frequencies $\omega_H$ and $\omega_C$. Therefore, by choosing $\omega_C = 2E_0\Delta$ and $\omega_H = 2E_0\sqrt{\Delta^2 + 1/4}$, the energy spacing of the qubit $\Delta E(t)$ is in resonance with the cold bath for $u = 0$, and in resonance with the hot bath for $u = 1/2$. Different values of $u$ indicate different level spacing $\Delta E(t)$.

This means that for $u = 0$, the photonic heat flow will almost exclusively take place with the cold bath 3, while for $u = 1/2$ it will almost exclusively take place with the hot bath 1. For intermediate values of $u(t)$, the coupling to the baths 1, 3 is weak, so the system is approximately isolated (the "broadening" of these resonances is described by the quality factor $Q_\alpha = R_\alpha^{-1}\sqrt{L_\alpha/C_\alpha}$, where large values of $Q_\alpha$ represent peaked and narrow resonances, while smaller values of $Q_\alpha$ represent broader resonances).

Next, the finite-time Otto cycle is considered in more detail.

As discussed previously, the optimization of the power is a challenging problem. In the prior art according to Ref. [1], various finite-time cycles inspired by the ideal Otto cycle are proposed. The idea in Ref. [1] is to study cycles where the control $u(t)$ oscillates between $u = 0$ and $u = 1/2$. Indeed, at $u = 0$ the system is coupled to the cold bath, approximately implementing the cold isothermal stroke. When $u(t)$ varies between 0 and 1/2 approximately the adiabatic expansion stroke is implemented. At $u = 1/2$ approximately the hot isothermal stroke is implemented, and finally the adiabatic compression stroke is approximately implemented when ramping the control $u(t)$ from 1/2 back to 0. Ref. [1] studies a sinusoidal, trapezoidal and square wave oscillating between $u = 0$ and $u = 1/2$ with a variable period. Among these possibilities, Ref. [1] finds that the trapezoidal protocol with a specific finite period performs best, i.e., yields the largest cooling power.

However, there is no guarantee that this is indeed the optimal strategy. The present invention applies a different method to the same setup without making any assumptions on the specific shape of the control $u(t)$. This method is based on Reinforcement Learning. More particularly, reinforcement learning is used to find cycles that provide maximum cooling power in the specific setup of Fig. 5 (or, alternatively, cycles that provide maximum extracted power).

The aim is to find cycles that maximize the long-term average cooling power. More specifically, the task is to determine how to modulate the control $u(t)$ in time as to maximize the long-term average cooling power.

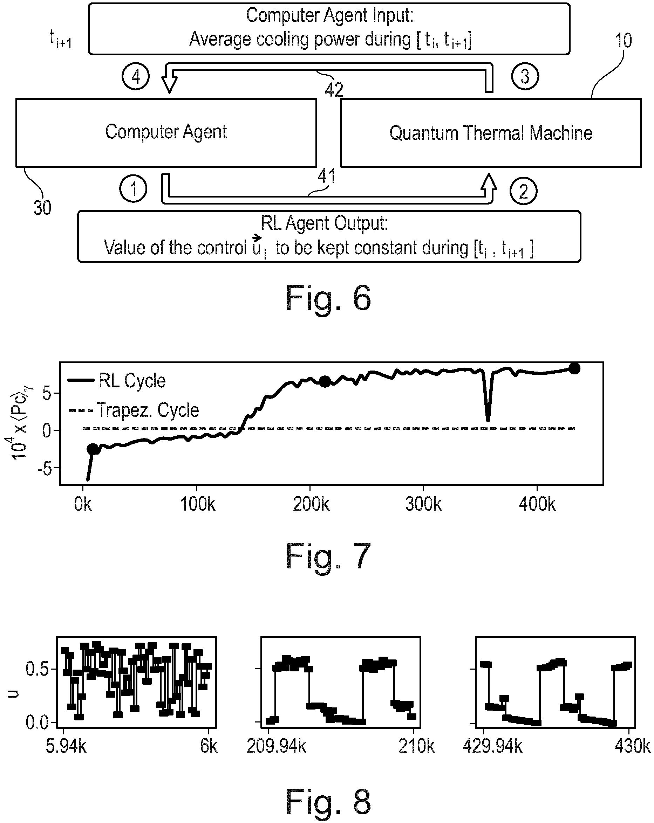

Fig. 6 is a schematic representation of the learning process which consists of a repeated interaction between a computer agent 30 and the quantum thermal machine 10. The QTM 10 can either be a real experimental setup, or a software simulation of a QTM 10. The two elements 10, 30 are represented as "black boxes" that exchange information to discover the optimal cycle. The interaction is as follows:

First, time $t$ is discretized into small time steps with spacing $\Delta t$. These time steps are denoted as $t_1, t_2, ...$, such that $t_i = i\Delta t$. The following four steps are iterated at each time-step:

1. At time $t_i$, based on the experience accumulated in the previous time steps, the computer agent 30 outputs a value $u_i$ of the control that is passed to the QTM 10, lower arrow 41 of Fig. 6.
2. At time $t_i$, the QTM 10 receives the value of the control $u_i$, and applies such control. This value of the control is kept constant during the time interval $[t_i, t_{i+1}]$ of duration $\Delta t$.
3. At time $t_{i+1}$, the QTM 10 outputs the average cooling power $r_{i+1}$, corresponding to the short-term average heat flux flowing out of the cold bath, during the time interval $[t_i, t_{i+1}]$, and passes this this information to the computer agent 3, upper arrow 42 of Fig. 6. The average cooling power $r_{i+1}$ represents a short-term reward input into the computer agent. More generally, the short-term reward is representative of a short-term average of a function of the heat fluxes flowing out of the cold bath during the time interval $[t_i, t_{i+1}]$, wherein the mentioned function may be a linear combination of heat fluxes.
4. At time step $t_{i+1}$ the computer agent 30 receives as input the average cooling power $r_{i+1}$ during the time interval $[t_i, t_{i+1}]$, and this feedback is processed to "learn" how to better control the QTM 10.

Steps 1-4 are repeated for many time steps, and this allows the computer agent 30 to progressively learn better and better choices of the control parameter $u_i$. Eventually, the algorithm "converges", meaning that the long-term average cooling power of the machine reaches some maximum value, and the choices of

$u_i$ become periodic. The optimal cycle u(t) is thus given by a piece-wise constant function taking values $u_i$ during $[t_i, t_{i+1}]$.

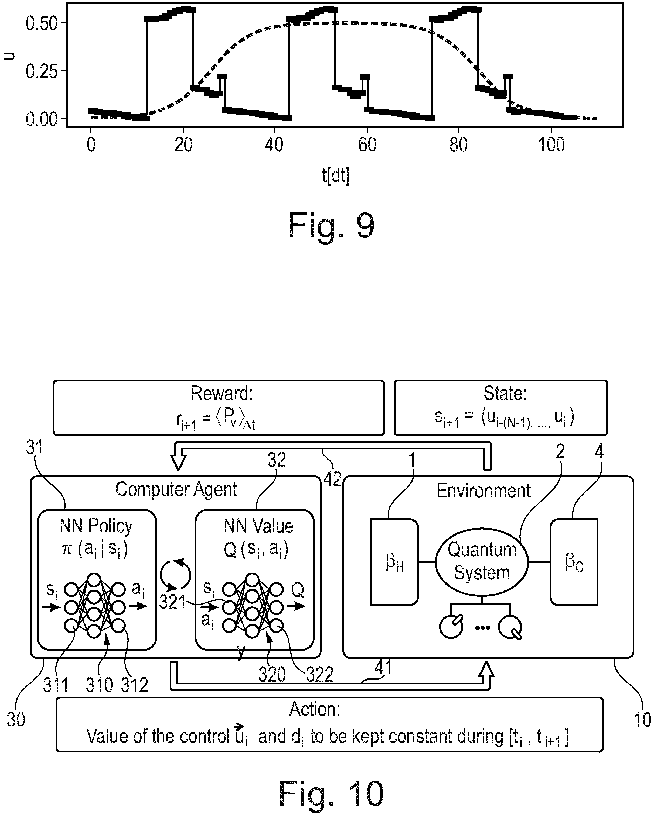

The success of this method is illustrated in Figs. 7 to 9. Fig. 7 shows the running long-term average of the cooling power $\langle P_C \rangle_\gamma$ as a function of the time-step during the whole training. The dashed line represents the maximum cooling power found by optimizing the trapezoidal cycle proposed in Ref. [1] and shown as a dashed line Fig. 9. Fig. 8 shows the control parameter $u(t)$, as a function of the time-steps, chosen at three different moments during training highlighted by the black dots in Fig. 7. The optimal function $u(t)$ learned at the end of the training is shown as a thick line in Fig. 9.

Initially, the method has no knowledge of the system, and the choice of u(t) is random (Fig. 8, left), producing negative cooling power (below zero in Fig.7), i.e., dissipating heat into the cold bath instead of extracting it. With increasing time, the method learns how to control the refrigerator: $\langle P_C \rangle_\gamma$ increases, and structure appears in the chosen control (Fig. 8, center and right). Eventually the method converges, and $\langle P_C \rangle_\gamma$ saturates to a finite positive value given by the cycle shown in Fig 9 as a thick line.

For comparison, also the optimal trapezoidal cycle for this system was computed, finding the finite-time cycle displayed in Fig. 9 as a dashed line. The corresponding cooling power is displayed in Fig. 7a as a dashed line. As can be seen, the inventive method finds a complicated and un-intuitive control strategy, shown as thick line in Fig. 9, which alternates smooth and abrupt controls yielding a much larger cooling power.

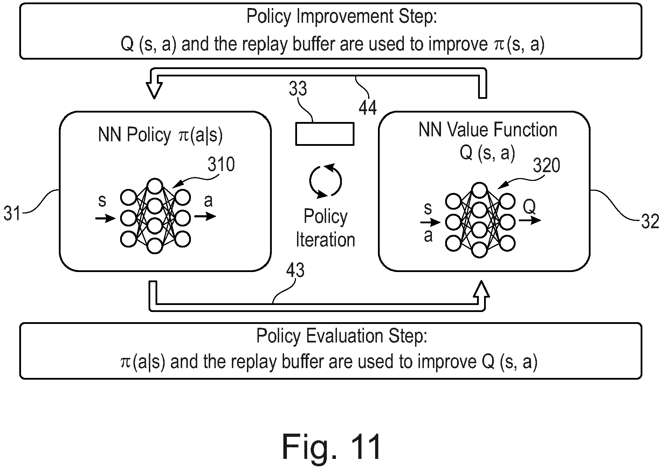

Figures 10 and 11 provide additional insight and detail of the computer agent 30 and the reinforcement learning algorithm. However, before discussing Figures 10 and 11, a few general remarks are at place. As discussed, an arbitrary QTM is considered that can be controlled by a set of continuous control parameters $\vec{u}(t)$ (in the previous example, a single continuous control parameter $u(t)$ was described), and eventually through an additional discrete control $d(t) = \{Hot, Cold, None\}$ which determines which bath 1, 3 is coupled to the system 2. In order to develop a model-free method, the following two assumptions are made:

Assumption 1: the quantum thermal machine can measure the heat flux $J_\alpha(t)$ (or at least the time-average of a given function of the heat fluxes over some finite timescale $\Delta t$);
Assumption 2: The heat flux $J_\alpha(t)$ (or at least the given function of the heat fluxes) is a function of the control history, i.e. of $\overline{u}(\tau)$ and $d(\tau)$ in the time interval $\tau \in [t - T, t]$, where T is some timescale.

Any experimental device or theoretical model that satisfies these two requirements can be optimized by the inventive method.

It is pointed out that in case of a given function of heat fluxes multiple heat fluxes are present, wherein the multiple heat fluxes are all heat fluxes of the quantum thermal machine in the given time-interval. Accordingly, the value of each heat flux during the given time-interval is considered. This could be, in examples, several heat fluxes between the hot thermal bath and the quantum system, and/or several heat fluxes between the cold thermal bath and the quantum system in the considered time-interval.

It is further pointed out that $J_H(t)$ and $Jc(t)$ are two independent quantities and independent functions of time. Based on which function of the heat fluxes is to be optimized (i.e., whether to optimize the long-term power extracted from a heat engine, or the long-term cooling power of a refrigerator), the considered heat fluxes change. Specifically, this means that the short-term reward $r_i$ changes. This short-term reward is, in general, an average of a function of the heat fluxes $J_H(t)$ and $Jc(t)$. For example, if a refrigerator shall be optimized, $r_i$ is simply the short term average of $Jc(t)$ during the time interval $[t_{i-1}, t_i]$, whereas, if heat engine shall be optimized, $r_i$ is the time average of $J_H(t) + Jc(t)$. In general, as reward the time average of any function of $J_H(t)$ and $Jc(t)$ may be considered, and this would end up optimizing some other long-term reward.

Assumption 2 is further discussed. The assumption trivially holds for any QTM in the limit $T \to \infty$, and a finite timescale $T$ can be rigorously identified within the weak system-bath coupling regime, and in the more general framework of the reaction coordinate method, which can describe non-Markovian and strong-coupling effects. Physically, the validity of such assumption relies on the presence of dissipation. Indeed, in a closed quantum system the state at time $t$ depends on the entire control history. However, this is not the case for open quantum system. The interest is in thermodynamics, which involves coupling the system to thermal baths. The timescale $T$ then naturally emerges by making the minimal assumption that the coupling of the quantum system to the thermal baths drives the state of the systems (or of some enlarged subsystem including degrees of freedom of the baths) towards a thermal state within some timescale $T$.

The two main thermal machines considered are the heat engine and the refrigerator. A heat engine is used to extract work, while a refrigerator is used to extract heat from the cold bath. Therefore, these two specific functions of the heat fluxes are defined

$$P_E(t) = J_H(t) + J_C(t), \qquad P_C(t) = J_C(t),$$

respectively with $P_E(t)$ as the instantaneous power of a heat engine E (since the total heat extracted coincides with the work if the internal energy difference is zero, as in cycles), and with $P_C(t)$ as the instantaneous cooling power of a refrigerator R.

As discussed, the object is to determine the optimal driving, i.e., to determine the functions $\vec{u}(t)$ and $d(t)$ that maximizes the average power on the long run. It is thus defined the following exponentially weighted average of the power

$$\langle P_v \rangle = \bar{\gamma} \int_0^{+\infty} e^{-\bar{\gamma} t} P_v(t)\, dt,$$

for $v$ = E, C, where $\bar{\gamma}$ determines the timescale over which an average is applied. Typically, $\bar{\gamma}$ is chosen such that the power is averaged over a "long time-scale". This is a generalization of the formula presented with respect to Fig. 1.

The general result is the following: it is proposed a Reinforcement Learning (RL) based method that, under the assumption (i) and (ii) described above, has the following properties:

1. automatically determines the functions $\vec{u}(t)$ and $d(t)$ that maximizes the long-term average cooling power $\langle P_C \rangle$ of refrigerator, or the long-term average extracted power from heat engines $\langle P_E \rangle$, or in general the long-term average of any function such as linear combination of the heat fluxes flowing out of the thermal baths (the long-term average representing a long-term reward);

2. is model-free, meaning that the same exact algorithm can be applied to any QTM without any knowledge of the system (in the specific example, we do not need to know the value of any of the elements composing the circuit, neither that the system is made up of a qubit);

3. only requires the average power, i.e. the average of a given function of heat fluxes during each time step $\Delta t$ as feedback from the real or simulated QTM.

The method can be applied to any device even if the system parameters are not known, in the presence of noise and/or constraints in the control.

Now referring again to Fig. 10, Fig. 10 is a schematic representation of a reinforcement learning algorithm applied to power maximization of QTMs. Based on a current state $s_i$, the computer agent 30 choses an action $a_i = (\vec{u}_i, d_i)$ to perform on the environment according to a policy function $\pi(a_i|s_i)$ 31. Based on such action, the environment, in the present case the quantum thermal machine 10, returns a reward $r_{i+1}$ and the new state $s_{i+1}$ to the computer agent 30. This feedback is used to improve the policy function. These steps are repeated until convergence.

More particularly, as discussed with respect to Fig. 6, the computer agent 30 must learn to master some task by repeated interactions with the environment / quantum thermal machine 10. Discretizing time in time-

step with spacing $\Delta t$, $s_i \in S$ denotes the state of the environment at time $t = i\,\Delta t$, where $S$ is the *state space*. At each time step $t_i$, the agent 30 must choose an action $a_i \in \mathcal{A}$ to perform on the environment 10 based on its current policy, lower arrow 41. $\mathcal{A}$ is the action space, and the policy $\pi(a_i|s_i)$ 31 is a function that describes the probability distribution of choosing action $a_i$, given that the environment is in state $s_i$. The environment 10 then evolves its state according to the chosen action and provides feedback back to the agent by returning the updated state $s_{i+1}$ and a scalar quantity $r_{i+1}$ known as the reward, upper arrow 42.

This procedure is reiterated for a large number of time-steps. The aim of the agent 30 is to use the feedback, i.e., short-term rewards ($r_{i+1}$) it receives from the environment 10 to learn an optimal policy that maximizes, in expectation, the discounted long-term sum of rewards it receives from the environment, defined as

$$r_1 + \gamma r_2 + \gamma^2 r_3 + \cdots = \sum_{n=0}^{\infty} \gamma^k r_{k+1}, \qquad (1)$$

where $\gamma \in [0,1)$ is the discount factor which determines how much there is an interest in future rewards, as opposed to immediate rewards.

It is pointed out that equation (1) defines the long-term "weighed sum" of the short term rewards. On the other hand, the reinforcement learning algorithm is configured to maximize the long-term reward which consists of the long-term "weighed average" of the short term rewards. However, the "weighed sum" of the short term rewards and the "weighed average" of the short term rewards are linked by the factor $(1-\gamma)$. More particularly, if equation (1) is mulitiplied by $(1-\gamma)$, it becomes the long-term "weighed average" of the short term rewards. The factor $(1 - \gamma)$ is simply the normalization term.

The two versions (sum and average) exist because, in the reinforcement learing context, maximizing the weighed sum is typically discussed, whereas in the physics context, maximizing the average is more meaningful. However, mathematically maximizing one or the other is exactly the same.

Formula (1) thus defines the long-term reward and is equivalent to the statement that the long-term reward comprises a long-term weighed average of the short term rewards^($r_{i+1}$).

The computer agent 30 in addition to the policy function $\pi(a|s)$ 31 further comprises a value function $Q^\pi(s,a)$ 32. Both quantities are parameterized using a particular architecture of neural networks 310, 320 designed to process large time-series, each neural network 310, 320 having input nodes 311, 321 and output nodes 312, 322. The relationship between the policy function

$\pi(a|s)$ 31 and the value function $Q^\pi(s, a)$ 32 will be discussed in more detail with respect to Fig. 11.

The reinforcement learning of Fig. 10 is applied to a QTM 10, such as the QTM 10 of Fig. 6. Discretizing time in steps with spacing $\Delta t$, it is searched for cycles, described by the function $\vec{u}(t)$ and, optionally additionally $d(t)$, that are constant during each time-step. Accordingly, as shown in Fig. 10, as *action space*

$$\mathcal{A} = \{(\vec{u},d)|\ \vec{u} \in \mathcal{U}, d \in$$

{Hot, Cold, None}} is chosen, where $u$ is the continuous set of accessible controls, which can account for any experimental limitation. This means that an *action* $a_i$ corresponds to the choice of the control $\bar{u}_i$ and $d_i$ that will be kept constant during in the time interval $[t_i, t_{i+1}]$ of duration $\Delta t$. Accordingly, in such context, the action $a_i$ is a value of the considered control parameter such as $(\bar{u}(t))$, optionally added by a value of $d(t)$, output to the quantum thermal machine 10.

As state $s_i$ the control history in the time interval $[t_i - T, t]$ is chosen, where $T$ is some time-scale. In practice, it must be chosen "large enough" for assumption 2 to hold. Denoting with $a_i = (\vec{u}_i, d_i)$ the action taken at time-step $i$, the environment state is identified with the series $s_i = (a_{i-N}, a_{i-(N-1)}, ..., a_{i-1})$, where $N = T/\Delta t$. The state thus corresponds to the series of actions chosen between $t_i - T$ and $t_i$. This is a valid choice for the following reason: reinforcement Learning is based on the Markov Decision Process framework. Thus, the probability of evolving to a future state $s_{i+1}$ and of receiving a reward $r_{i+1}$ must only be a function of the previous state $s_i$ and of the chosen action $a_i$. The state $s_i$ corresponds to the sequence of $(a_{i-N}, a_{i-(N-1)}, ..., a_{i-1})$ in a specified time interval $[t_i - T, t_i]$.

In view of assumption 2 discussed above, and by choosing

$$r_{i+1} = \frac{1}{\Delta t} \int_{t_i}^{t_{i+1}} P_v(\tau)d\tau \qquad (2)$$

as reward, the Markovianity assumption is guaranteed to hold. Indeed, the dynamics of the state is trivial and deterministic (it simply consists of appending the latest action to the timeseries), while the reward is a function of the state and of the last action by virtue of assumption 2. Physically, $r_{i+1}$ is the average power of the machine during the time interval $[t_i, t_{i+1}]$, which in general can consist of the average of any linear combination or other function of the heat fluxes. Plugging this reward into Eq. (1), it is seen that the aim of the agent is to maximize the long-term average power $\langle P_v \rangle$, where $\overline{\gamma} = -\ln(\gamma/\Delta t)$. To be precise, plugging the reward into Eq. (1) gives $\langle P_v \rangle$ (up to an irrelevant constant prefactor) only in the limit of $\Delta t$

$\to 0$. However, also for finite $\Delta t$, both quantites are proportional to time-averages of the power, so they are equally valid definitions to describe a long-term power maximization. In the RL notation, $\gamma$ sets the timescale for the power averaging, with $\gamma \to 1$ corresponding to long term averaging.

The reward $r_{i+1}$ is thus the average of a given function of the heat fluxes $J_H(t)$, $Jc(t)$ during the time-interval $([t_i, t_{i+1}])$, such as the average of the instantaneous cooling power $P_C$.

The higher the long-term sum of rewards [defined in Eq. (1)], the better is the cycle. The method converges to a maximum of the long-term sum of reward which corresponds to maximized long-term average power.

The procedure to learn optimal cycles is then to repeat over and over the steps 1 to 4 described with respect to Fig. 6.

Referring to Fig. 11, step 1, namely: "at time $t_i$, based on the experience accumulated in the previous time steps, the computer agent 30 outputs a value $u_i$ of the control that is passed to the QTM 10" is further discussed. More particularly, it is discussed how experience is used to learn how to choose actions, namely, how experience obtained by the agent 30 is used to learn optimal cycles for power extraction. To this end, a generalization of the so-called soft-actor critic (SAC) algorithm is employed, which was first developed for continuous actions in Refs. [6, 7], to handle a combination of discrete and continuous actions as discussed in Refs. [8, 9].

Fig. 11 shows additional detail of the computer agent 30 of Fig. 10 comprising a policy function $\pi(a|s)$ 31 and a value function $Q(s,a)$ 32. Fig. 11 is a schematic representation of policy iteration, which uses experience stored in a replay buffer to learn two quantities: the policy $\pi(a|s)$ 31 and the value function $Q(s,a)$ 32, both of which are part of the computer agent 30. Both quantities are parameterized using a particular architecture of neural networks 310, 320. The policy $\pi(a|s)$ 31 is an actor and the value function $Q(s, a)$ 32 is a critic within the framework of reinforcement learning,

Both the actor and the critic are neural networks that are trying to learn the optimal behavior. The actor is learning the right actions using feedback from the critic to know what a good action is and what is bad, and the critic is learning the value function from the received rewards so that it can properly criticize the action that the actor takes. This is why two neural networks are setup in the agent 30; each one plays a very specific role.

The policy $\pi(a|s)$ describes the probability of choosing action $a$, given that the environment is in state s. The value function $Q(s, a)$ describes the average long-term sum of rewards that will be obtained in the future if the environment is initially in state $s$, and if the agent first chooses action $a$, and then chooses the future actions according to the given policy $\pi(a|s)$. The output value function $Q(s, a)$ may be compared with the reward $r_i$ to determine an error that is used to update the value func-

tion $Q(s, \alpha)$.

As the agent performs actions on the environment and receives feedback, it stores the observed transitions $(s_i, a_i, r_{i+1}, s_{i+1})$ in a replay buffer 33 (schematically depicted). The replay buffer 33 is then used to learn both $\pi(a|s)$ and $Q(s, a)$, which are parameterized using neural networks. This is a known as "policy iteration" in the art. A particular neural network architecture, based on multiple 1D convolutional layers, may be used that allows to handle states that are possibly long time-series of actions.

As sketched in Fig. 11, Learning of $\pi(a|s)$ and $Q(s,a)$ is achieved by policy iteration which consists of iterating over two steps: a policy evaluation step 43, and a policy improvement step 44. In the policy evaluation step 43, the replay buffer and the current policy $\pi(s, a)$ are used to improve the value function $Q(s, a)$, whereas the policy improvement step 44 consists of improving the current policy $\pi(a|s)$ by exploiting both the value function and the replay buffer.

In practice, the complete learning algorithm consists of repeating steps 1-4 discussed with respect to Fig. 6, where at step 1 one policy evaluation step and one policy improvement step are performed.

The method of the present invention can be easily applied to an arbitrary number of thermal baths, each at some different temperature, and any function such as linear combination of the heat currents can be optimized. This includes as subcases the long-term average extracted power from a heat engine and the long-term average cooling power of a refrigerator.

It should be understood that the above description is intended for illustrative purposes only and is not intended to limit the scope of the present disclosure in any way. Also, those skilled in the art will appreciate that other aspects of the disclosure can be obtained from a study of the drawings, the disclosure, and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure.

Appendix of cited references:

[1] B. Karimi and J. P. Pekola, "Otto refrigerator based on a superconducting qubit: Classical and quantum performance," Phys. Rev. B., vol. 94, p. 184503, 2016.

[2] A. Ronzani, B. Karimi, J. Senior, Y.-C. Chang, J. T. Peltonen, C.-D. Chen and J. P. Pekola, "Tunable photonic heat transport in a quantum heat valve," Nat. Phys., vol. 14, p. 991, 2018.

[3] J. Senior, A. Gubaydullin, B. Karimi, J. T. Peltonen, J. Ankerhold and J. P. Pekola, "Heat rectification via a superconducting artificial atom," Commun. Phys., vol. 3, p. 40, 2020.

[4] J. P. Pekola, B. Karimi, G. Thomas and D. V. Averin, "Supremacy of incoherent sudden cycles," Phys. Rev. B, vol. 100, p. 085405, 2019.

[5] K. Funo, N. Lambert, B. Karimi, J. P. Pekola, Y. Masuyama and F. Nori, "Speeding up a quantum refrigerator via counterdiabatic driving," Phys. Rev. B, vol. 100, p. 035407, 2019.

[6] T. Haarnoja, A. Zhou, P. Abbeel and S. Levine, "Soft Actor-Critic: Off-Policy Maximum Entropy Deep Reinforcement Learning with a Stochastic Actor," International Conference on Machine Learning, vol. 80, p. 1861, 2018.

[7] T. Haarnoja, A. Zhou, K. Hartikainen, G. Tucker, S. Ha, J. Tan, V. Kumar, H. Zhu, A. Gupta, P. Abbeel and S. Levine, "Soft actor-critic algorithms and applications," Preprint arXiv:1812.05905, 2018.

[8] P. Christodoulou, "Soft Actor-Critic for Discrete Action Settings," Preprint arXiv:1910.07207, 2019.

[9] O. Delalleau, M. Peter, E. Alonso and A. Logut, "Discrete and Continuous Action Representation for Practical RL in Video Games," Preprint arXiv:1912.11077, 2019.

**Claims**

1. A quantum thermal system comprising:

   - a quantum thermal machine (10) comprising at least two thermal baths (1, 3), each thermal bath (1, 3) **characterized by** a temperature, and a quantum system (2) coupled to the thermal baths (1, 3),
   - the quantum thermal machine (10) configured to perform thermodynamic cycles between the quantum system (2) and the thermal baths (1, 3), the thermodynamic cycles including heat fluxes ($J_H(t), Jc(t)$) flowing from the thermal baths (1, 3) to the quantum system (2),
   - wherein the heat fluxes ($J_H(t), Jc(t)$) vary in time and are dependent on at least one time-dependent control parameter ($\vec{u}(t), d(t)$),
   - a computer agent (30) implementing a reinforcement learning algorithm, wherein the at least one time-dependent control parameter ($\vec{u}(t), d(t)$) is varied in time by the computer agent (30) to change the heat fluxes ($J_H(t), Jc(t)$) such that a predefined long-term reward dependent on the heat fluxes ($J_H(t), Jc(t)$) is maximised.

2. Quantum thermal system according to claim 1, **characterized in that** the computer agent (30) and the quantum thermal machine (10) are configured to perform a method comprising the steps of:

- discretizing time in time-steps ($t_i$) with defined spacing ($\Delta t$),
- at a time step ($t_i$), passing a value of the at least one time-dependent control parameter ($\vec{u}(t),d(t)$) from the computer agent (30) to the quantum thermal machine (10), the value being an output value of the reinforcement learning algorithm,
- set at least one time-dependent control parameter ($\vec{u}(t),d(t)$) at the quantum thermal machine (10) to the received value throughout the subsequent time-interval ($[t_i, t_{i+1}]$),
- at the subsequent time step ($t_{i+1}$), output by the quantum thermal machine (10) a short-term reward ($r_{i+1}$) to the computer agent (30), the short-term reward ($r_{i+1}$) being representative of a short-term average of a function of the heat fluxes ($J_H(t),J_C(t)$) during the time-interval ($[t_i, t_{i+1}]$) caused by the received value, and
- processing the short-term reward ($r_{i+1}$) as an input value to the reinforcement learning algorithm,
- repeating the above steps for a plurality of time-steps ($t_i$), wherein the reinforcement learning algorithm is configured to maximize the long-term reward, consisting of a long-term weighed average of the short term rewards, on the basis of the received short-term rewards ($r_{i+1}$).

3. Quantum thermal system according to claim 1 or 2, **characterized in that** the quantum thermal machine (10) is configured to act as a refrigerator, wherein in each thermodynamic cycle work is performed on the quantum system (2) to extract heat from the cold thermal bath (3) and transmit heat to the hot thermal bath (1), and wherein the long-term reward to be maximized is the long-term time-average of the cooling power of the refrigerator.

4. Quantum thermal system according to claim 1 or 2, **characterized in that** the quantum thermal machine (10) is configured to act as a heat engine, wherein in each thermodynamic cycle work can be harvested from the quantum system (2) while it receives heat from the hot thermal bath (1) and transmits heat to the cold thermal bath (3), and wherein the long-term reward to be maximized is the long-term time-average of the power extracted from the heat engine.

5. Quantum thermal system according to any of the preceding claims, **characterized in that** the quantum system (2) comprises at least one qubit (20), in particular a superconducting transmon qubit, having a ground state and an excited state which define an energy spacing ($\Delta E$) therebetween.

6. Quantum thermal system according to claim 5, **characterized in that** an applied magnetic flux ($\phi$) of a magnetic field interacting with the qubit (20), which controls the energy spacing ($\Delta E$) of the qubit (20), is the or one of the time-dependent control parameters ($\vec{u}(t)$).

7. Quantum thermal system according to claim 6, **characterized in that** the magnetic flux ($\phi$) is modulated in time to control the energy spacing ($\Delta E$) of the qubit (20) as to maximize the long-term reward.

8. Quantum thermal system according to any of the preceding claims, **characterized in that** the thermal baths (1, 3) are each implemented by a RLC circuit coupled to the quantum system via a capacitor.

9. Quantum thermal system according to any of the preceding claims, **characterized in that** the quantum thermal machine (10) is a real world implementation.

10. Quantum thermal system according to any of claims 1 to 8, **characterized in that** the quantum thermal machine (10) is a computer simulation.

11. Quantum thermal system according to any of the preceding claims, as far as referring to claim 2, **characterized in that** the reinforcement learning algorithm is configured to receive for each time-step as input a state ($s_i$) and the short-term reward ($r_i$) and to output an action ($a_i$) to the quantum thermal machine (10), wherein

- the state ($s_i$) is a sequence of past actions ($a_{i-N}$, $a_{i-(N-1)}$, ..., $a_{i-1}$) in a specified time interval ($[t_i - T, t_i]$),
- the short-term reward ($r_i$) is representative of a short-term average of the function of the heat fluxes ($J_H(t), J_C(t)$) during the time-interval ($[t_{i-1}, t_i]$),
- the action ($a_i$) is to output a value of the at least one time-dependent control parameter ($\vec{u}(t),d(t)$) to the quantum thermal machine (10),
- the reinforcement learning algorithm comprising:

- a policy function ($\pi$) realized by a neural network (310) or other machine learning structure, wherein a state ($s$) is input to the policy function ($\pi$) and an action ($a$) is output from the policy function ($\pi$),
- a value function ($Q$) realized by a neural network (320) or other machine learning structure, wherein a state ($s$) and an action ($a$) are inputs into the value function ($Q$) and a value is output from the value function ($Q$),
- a replay buffer (33) wherein past experience is saved at each time-step as a collection of transitions (($s_i$, $a_i$, $r_{i+1}$, $S_{i+1}$)),
- wherein the value function ($Q$) and the replay buffer (33) improve the policy function ($\pi$),
- wherein the policy function ($\pi$) and the replay buffer (33) improve the value function ($Q$),
- wherein the action ($a_i$), obtained by inputting the state ($s_i$) into the policy function ($\pi$), is output to the quantum thermal machine (10) at each time-step.

12. Quantum thermal system according to any of the preceding claims, as far as referring to claim 2, **characterized in that** the function of the heat fluxes ($J_H(t)$, $Jc(t)$) is one of:

- one of the heat fluxes ($J_H(t)$, $Jc(t)$),
- a linear combination of the heat fluxes ($J_H(t)$, $Jc(t)$),

wherein the short-term reward ($r_{i+1}$) representative of the average of the function of the heat fluxes ($J_H(t)$, $Jc(t)$) during the time-interval ([$t_i$, $t_{i+1}$]) is one of:

- the average of one of the heat fluxes ($J_H(t)$, $Jc(t)$) during the time-interval ([$t_i$, $t_{i+1}$]),
- the average of a linear combination of the heat fluxes ($J_H(t)$, $Jc(t)$) during the time-interval ([$t_i$, $t_{i+1}$]).

13. A method for maximizing a long-term reward dependent on heat fluxes ($J_H(t)$, $Jc(t)$) in thermodynamic cycles of a quantum thermal machine (10), wherein the quantum thermal machine (10) performs thermodynamic cycles between a quantum system (2) and at least two thermal baths (1, 3), and wherein the heat fluxes ($J_H(t)$, $Jc(t)$) vary in time and are dependent on at least one time-dependent control parameter ($\vec{u}(t)$, $d(t)$), the method comprising:

- discretizing time in time-steps ($t_i$) with defined spacing ($\Delta t$),
- at a time step ($t_i$), passing a value of the at least one time-dependent control parameter ($\vec{u}(t)$, $d(t)$) from a computer agent (30) to the quantum thermal machine (10), the value being an output value of a reinforcement learning algorithm,
- set at least one time-dependent control parameter ($\vec{u}(t)$, $d(t)$) at the quantum thermal machine (10) to the received value throughout the sub-

sequent time-interval ([$t_i$, $t_{i+1}$]),
- at the subsequent time step ($t_{i+1}$), output by the quantum thermal machine (10) a short-term reward ($r_{i+1}$) to the computer agent (30), the short-term reward ($r_{i+1}$) being representative of a short-term average of a function of the heat fluxes ($J_H(t)$, $J_C(t)$) during the time-interval ([$t_i$, $t_{i+1}$]) caused by the received value, and
- processing the short-term reward ($r_{i+1}$) as an input value to the reinforcement learning algorithm,
- repeating the above steps for a plurality of time-steps ($t_i$), wherein the reinforcement learning algorithm is configured to maximize the long-term reward on the basis of the received short-term rewards ($r_{i+1}$), the long-term reward being a long-term weighed average of the short term rewards.

14. The method of claim 13, further comprising:

- receiving for each time-step as input to the reinforcement learning algorithm a state ($s_i$) and the short-term reward ($r_i$) and outputting an action ($a_i$) to the quantum thermal machine (10), wherein
- the state ($s_i$) is a sequence of past actions ($a_{i-N}$, $a_{i-(N-1)}$, ..., $a_{i-1}$) in a specified time interval ([$t_i - T$, $t_i$]),
- the short-term reward ($r_i$) is representative of a short-term average of the function of the heat fluxes ($J_H(t)$, $Jc(t)$) during the time-interval ([$t_{i-1}$, $t_i$]),
- the action ($a_i$) is to output a value of the at least one time-dependent control parameter ($\vec{u}(t)$, $d(t)$) to the quantum thermal machine (10),
- wherein the reinforcement learning algorithm comprises:

- a policy function ($\pi$) realized by a neural network (310) or other machine learning structure, wherein a state ($s$) is input to the policy function ($\pi$) and an action ($a$) is output from the policy function ($\pi$),
- a value function ($Q$) realized by a neural network (320) or other machine learning structure, wherein a state ($s$) and an action ($a$) are inputs into the value function ($Q$) and a value is output from the value function ($Q$),
- a replay buffer (33) wherein past experience is saved at each time-step as a collection of transitions of the form (($s_i$, $a_i$, $r_{i+1}$, $S_{i+1}$)).
- wherein the value function ($Q$) and the replay buffer (33) improve the policy function ($\pi$),
- wherein the policy function ($\pi$) and the re-

play buffer (33) improve the value function (Q),
- wherein the action ($a_i$), obtained by inputting the state ($s_i$) into the policy function ($\pi$), is output to the quantum thermal machine (10) at each time-step.

**15.** A computer agent (30) comprising:

- a processor; and
- a memory device storing instructions executable by the processor, the instructions being executable by the processor to perform a method for maximizing a long-term reward dependent on heat fluxes ($J_H(t), J_C(t)$) in thermodynamic cycles of a quantum thermal machine (10), the method comprising:

- providing a reinforcement learning algorithm outputting at discrete time steps ($t_i$) a value of a time-dependent control parameter ($\vec{u}(t), d(t)$),
- at the discrete time steps ($t_i$), passing the respective value of the time-dependent control parameter ($\vec{u}(t), d(t)$) to a quantum thermal machine (10),
- at the respective subsequent time steps ($t_{i+1}$), receiving a short-term reward ($r_{i+1}$) representative of a short-term average of a function of the heat fluxes ($J_H(t), J_C$(t)) at the quantum thermal machine (10) during a time-interval ($[t_i, t_{i+1}]$) caused by the value of the time-dependent control parameter ($\vec{u}(t), d(t)$) passed to the quantum thermal machine (10),
- processing the short-term reward ($r_{i+1}$) as an input value to the reinforcement learning algorithm,
- maximizing the long-term reward on the basis of the received short-term rewards ($r_{i+1}$), the long-term reward being a long-term weighed average of the short term rewards.

Fig. 1

Control parameters: ΔE(t)

Fig. 2

Fig. 3

20                    3

$Q_C$

$\Delta E_C$

A: Cold Isothermal

20                    20

$\Delta E_C$              $\Delta E_H$

B: Adiabatic Expansion

$\Delta E_H$

$Q_H$

1                    20

C: Hot Isothermal

$\Delta E_H$              $\Delta E_C$

20                    20

D: Adiabatic Compression

## Fig. 4

10

Hot Bath                    Cold Bath

$L_H$ $C_H$        Transmon        $L_C$ $C_C$
                   Qubit

$T_H, R_H$                                $T_C, R_C$

$C_1$              21              $C_2$

$\Phi$

1                                          3

22                    20

## Fig. 5

Computer Agent Input:
Average cooling power during [ $t_i$, $t_{i+1}$]

$t_{i+1}$

④

42

③

10

Computer Agent

Quantum Thermal Machine

30

①

41

②

RL Agent Output:
Value of the control $\vec{u}_i$ to be kept constant during [$t_i$ , $t_{i+1}$ ]

## Fig. 6

—— RL Cycle

- - - Trapez. Cycle

$10^4 \times \langle Pc \rangle_\gamma$

## Fig. 7

u

## Fig. 8

Fig. 9

Fig. 10

Policy Improvement Step:
Q (s, a) and the replay buffer are used to improve π(s, a)

33

44

NN Policy π(a|s)

310

s → a

31

Policy
Iteration

NN Value Function
Q (s, a)

320

s
→ Q
a

32

43

Policy Evaluation Step:
π(a|s) and the replay buffer are used to improve Q (s, a)

# Fig. 11

Europäisches
Patentamt

European
Patent Office

Office européen
des brevets

## EUROPEAN SEARCH REPORT

Application Number

**EP 21 19 1966**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAR{\I}\C{S} \C{C}AKMAK: "Finite-time two-spin quantum Otto engines: shortcuts to adiabaticity vs. irreversibility", ARXIV.ORG, CORNELL UNIVERSITY LIBRARY, 201 OLIN LIBRARY CORNELL UNIVERSITY ITHACA, NY 14853, 1 March 2021 (2021-03-01), XP081902739, DOI: 10.3906/FIZ-2101-10 * abstract * * sections i, II, IV * | 1-15 | INV. G06N3/08 G06N10/40 <br><br> ADD. G06N3/04 |
| A | PIERPAOLO SGROI ET AL: "Reinforcement learning approach to non-equilibrium quantum thermodynamics", ARXIV.ORG, CORNELL UNIVERSITY LIBRARY, 201 OLIN LIBRARY CORNELL UNIVERSITY ITHACA, NY 14853, 18 December 2020 (2020-12-18), XP081841574, * abstract * | 1-15 | |
| A | TOBIAS HAUG ET AL: "Machine learning engineering of quantum currents", ARXIV.ORG, CORNELL UNIVERSITY LIBRARY, 201 OLIN LIBRARY CORNELL UNIVERSITY ITHACA, NY 14853, 2 February 2021 (2021-02-02), XP081873716, DOI: 10.1103/PHYSREVRESEARCH.3.013034 * abstract * * appendix F * | 2-4, 11-15 | TECHNICAL FIELDS SEARCHED (IPC) <br><br> G06N |

The present search report has been drawn up for all claims

| Place of search | Date of completion of the search | Examiner |
|---|---|---|
| The Hague | 8 February 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. KARIMI ; J. P. PEKOLA.** Otto refrigerator based on a superconducting qubit: Classical and quantum performance. *Phys. Rev. B.,* 2016, vol. 94, 184503
- **A. RONZANI.** Tunable photonic heat transport in a quantum heat valve. *Nat. Phys.,* 2018, vol. 14, 991
- **J. SENIOR et al.** Heat rectification via a superconducting artificial atom. *Commun. Phys.,* 2020, vol. 3, 40
- **A. RONZANI ; B. KARIMI ; J. SENIOR ; Y.-C. CHANG ; J. T. PELTONEN ; C.-D. CHEN ; J. P. PEKOLA.** Tunable photonic heat transport in a quantum heat valve. *Nat. Phys.,* 2018, vol. 14, 991
- **J. SENIOR ; A. GUBAYDULLIN ; B. KARIMI ; J. T. PELTONEN ; J. ANKERHOLD ; J. P. PEKOLA.** Heat rectification via a superconducting artificial atom. *Commun. Phys.,* 2020, vol. 3, 40
- **J. P. PEKOLA ; B. KARIMI ; G. THOMAS ; D. V. AVERIN.** Supremacy of incoherent sudden cycles. *Phys. Rev. B,* 2019, vol. 100, 085405
- **K. FUNO ; N. LAMBERT ; B. KARIMI ; J. P. PEKOLA ; Y. MASUYAMA ; F. NORI.** Speeding up a quantum refrigerator via counterdiabatic driving. *Phys. Rev. B,* 2019, vol. 100, 035407
- **T. HAARNOJA ; A. ZHOU ; P. ABBEEL ; S. LEVINE.** Soft Actor-Critic: Off-Policy Maximum Entropy Deep Reinforcement Learning with a Stochastic Actor. *International Conference on Machine Learning,* 2018, vol. 80, 1861
- **T. HAARNOJA ; A. ZHOU ; K. HARTIKAINEN ; G. TUCKER ; S. HA ; J. TAN ; V. KUMAR ; H. ZHU ; A. GUPTA ; P. ABBEEL.** *Soft actor-critic algorithms and applications,* 2018
- **P. CHRISTODOULOU.** *Soft Actor-Critic for Discrete Action Settings,* 2019
- **O. DELALLEAU ; M. PETER ; E. ALONSO ; A. LOGUT.** *Discrete and Continuous Action Representation for Practical RL in Video Games,* 2019